# EUROPÄISCHE PATENTSCHRIFT

(11) **EP 1 426 706 B1**
(45) Veröffentlichungstag und Bekanntmachung des Hinweises auf die Patenterteilung: **20.08.2008**
(21) Anmeldenummer: 03025179.7
(22) Anmeldetag: 04.11.2003
(51) Int. Cl.: F24F 12/00, F24F 7/08

(54) **Lüftungsgerät**
Ventilation device
Dispositif de ventilation

(30) Priorität: 06.12.2002 DE 10257325; 20.02.2003 DE 10307047
(43) Veröffentlichungstag der Anmeldung: 09.06.2004
(73) Patentinhaber: Erwin Müller GmbH, 49808 Lingen (DE)
(72) Erfinder: Holtz, Hans-Joachim, 68259 Mannheim (DE)
(74) Vertreter: Busse & Busse Patentanwälte

(56) Entgegenhaltungen:
- EP-A- 0 942 237
- DE-A1- 3 632 268
- DE-A1- 19 539 811
- DE-A1- 19 911 645
- DE-U1- 20 114 892

## Beschreibung

Die Erfindung bezieht sich auf ein Lüftungsgerät gemäß der im Oberbegriff des Patentanspruchs 1 angegebenen Merkmale.

Aus der DE 195 39 811 C2 ist ein derartiges Lüftungsgerät bekannt, welches in einem Gehäuse zumindest ein Zuluft-Gebläse, einen Konvektor und voneinander getrennte Kanäle zur Luftführung enthält, wobei das Gehäuse eine raumaußenseitig liegende Einströmöffnung für die Zuluft und einem Innenraum eines Gebäudes zugeordnete Ausströmöffnung aufweist. Das Lüftungsgerät kann in eine Fassade- oder Fensterkonstruktion eingebaut werden. Ferner enthält das Lüftungsgerät ein Abluft-Gebläse sowie einen Kanal für die Abluft, welche durch eine dem genannten Innenraum zugewandte Ansaugöffnung des Gehäuses angesaugt werden und durch eine Abluftöffnung des Gehäuses nach außen abströmen kann. Zwecks integrierter Energierückgewinnung enthält das Gerät einen Wärmetauscher, um in der Abluft enthaltene Wärme der Zuluft zuzuführen. Der Konvektor ist von einem insbesondere flüssigen Medium durchströmbar und wahlweise als Heizelement oder Kühlelement entsprechend der mit dem Medium zugeführten Energie bzw. Wärme und der vorgegebenen Betriebsart. Soll mittels des Konvektors der genannte Innenraum des Gebäudes bei entsprechender Energie-Wärmezufuhr erwärmt werden, so muss insbesondere das Zuluft-Gebläse in Betrieb sein, um die Zuluft bzw. bei entsprechender Stellung von die Luftströmung beeinflussenden Klappen im Umluftbetrieb den Luftstrom über bzw. durch den Konvektor zu leiten.

Hiervon ausgehend liegt der Erfindung die Aufgabe zugrunde, das Lüftungsgerät der genannten Art mit einem geringen konstruktiven Aufwand dahingehend weiterzubilden, dass der Konvektor gemäß vorwählbarer Betriebsarten effektiv nutzbar ist. Das Lüftungsgerät soll bei kompakter Bauweise funktionssicher für die jeweils gewünschte Betriebsart nutzbar sein. Ferner soll das Lüftungsgerät in einfacher Weise und mit geringem Aufwand für unterschiedliche Einbausituationen zum Einsatz gelangen können.

Die Lösung dieser Aufgabe erfolgt gemäß der im Patentanspruch 1 angegebenen Merkmale.

Das vorgeschlagene Lüftungsgerät zeichnet sich durch eine kompakte und funktionsgerechte Konstruktion aus und ermöglicht aufgrund der bewegbaren Anordnung des Konvektors in einer ersten Position einer zwangsweise Luftführung über dem Konvektor, insbesondere bei eingeschaltetem Gebläse, und in einer zweiten Position des Konvektors eine freie Konvektion, und zwar bevorzugt bei abgeschaltetem Gebläse. Der Konvektor ist über geeignete Anschlüsse mit flexibel oder bewegbar ausgebildeten Leitungen verbunden, durch welche ein Medium, wie beispielsweise Wasser, zuführbar ist, um je nach Bedarf Heiz- oder Kühlenergie zuzuführen. Der dem Innenraum eines Gebäudes zugeordnete bzw. raumseitig angeordnete bewegbare Konvektor ist mit dem Gerätegehäuse derart verbunden und/oder diesem zugeordnet, dass im Betrieb keine Luftleckagen entstehen. In zweckmäßiger Weise ist dem Konvektor eine Kondensatschale nachgestellt, um gegebenenfalls die dem Raum zuzuführende Luft gezielt zu entfeuchten und anfallendes Kondensat kontrolliert abzuführen. Um Strömungsgeräusche im Konvektor zu reduzieren, ist der Konvektor in vorteilhafter Weise in einer Wärme- und / oder Schalldämmpackung montiert bzw. angeordnet. Bevorzugt ist der Konvektor auf einer Grundplatte unterhalb des Lüftungsgerätes angeordnet. Insbesondere auf der Grundplatte sind Mittel zur bewegbaren Lagerung des Konvektors vorgesehen, welche Mittel bevorzugt als Drehgelenk, Führungsschienen oder dergleichen ausgebildet sind. Diese Mittel ermöglichen eine Bewegung des Konvektors bei abgeschaltetem Gebläse in Richtung in den Raum hinein, um somit eine freie Konvektion zu ermöglichen. So wird eine gewisse und/oder vorgegebene Grundlast für den zu beheizenden oder zu kühlenden Raum des Gebäudes abgedeckt. Es wird somit dem Raum ohne mechanische Lüftung Energie, Wärme oder Kälte, zugeführt. Diese Betriebsart ist immer dann vorteilhaft, wenn keine Frischluftrate gefordert ist. Die für die Bewegung, insbesondere das Ausklappen und das Einklappen des Konvektors vorgesehene Antriebseinheit, welche bevorzugt als Stellantrieb ausgebildet ist, ist vorteilhaft seitlich am Konvektorrahmen und/oder einer Grundplatte angeordnet.

Weiterhin ist in Strömungsrichtung nach dem Konvektor ein Temperaturfühler zur Messung der Temperatur der ausströmenden Luft vorgesehen, um eine der Temperatur entsprechende Messgröße einer Regel- und Steuereinheit zuzuführen. Somit wird entsprechend den möglichen variablen Vorgaben insbesondere auf die Ausström- oder Ausblastemperatur Einfluss genommen. Über eine Regel- und Steuereinheit können sämtliche im Lüftungsgerät montierten Komponenten, wie Gebläse, Verschlusselemente oder Klappen der Kanäle, die Antriebseinheit des Konvektors und dergleichen geregelt, gesteuert und überwacht werden. Dies ist insbesondere dann von großem Nutzen, wenn in einem Gebäude eine Vielzahl von dezentralen Lüftungsgeräten montiert ist und diese zur Funktionsprüfung nicht geöffnet werden sollen. Mittels der Regel- und Steuereinheit kann in bevorzugter Weise, beispielsweise via Internet oder Datenleitung, auch eine Fernüberwachung des oder der dezentralen Lüftungsgeräte bzw. Lüftungskomponenten erfolgen.

Für die Bewegung des Konvektors ist eine Antriebseinheit vorgesehen, mittels welcher der Konvektor in die gewünschte Position bewegbar ist. Der Konvektor ist in vorteilhafter Weise im Bereich der Ausströmöffnung, insbesondere unterhalb derselben, angeordnet. Weiterhin kann der Konvektor im Rahmen der Erfindung in das Gehäuse unmittelbar integriert sein. Die schwenkbare Lagerung des Konvektors, insbesondere an dessen Unterseite, hat sich als besonders zweckmäßig erwiesen, so dass der Konvektor je nach der eingenommenen Betriebsstellung mit der Rückwand des Gehäuses flächenbündig ist oder bei freier Konvektion geöffnet ist. In der Stellung für freie Konvektion ist das Lüftungsgerät an der Unterseite, insbesondere im Bereich der Ausströmöffnung, bevorzugt automatisch verschlossen, so dass im Lüftungsgerät sich eine stehende Luftsäule einstellt, wodurch ein größtmöglicher Wärme- und Schallschutz über das erfindungsgemäße Lüftungsgerät bewirkt ist. Wie bereits ausgeführt, ist der Konvektor wahlweise für Heizung oder Kühlung ausgelegt, zweckmäßig in einem Ein-, Zwei-, Drei- oder Vierleitersystem.

Gemäß der Erfindung ist ein dezentrales aktives und autarkes sog- und druckgeregeltes Lüftungsgerät mit Heiz- und Kühlmöglichkeit geschaffen. Das Lüftungsgerät ist für den Einbau in eine Fassade- oder Fensterkonstruktion als Boden-, Brüstungs-, Decken- oder Paneelgerät ausgebildet. Das Lüftungsgerät enthält eine Zu-, Ab- und Umlufteinheit, zweckmäßig mit zusätzlich mögliche Frischluftansaugung, und zwar mittels Gebläse unterstützt. Es ist eine integrierte Energierückgewinnung mit einem Wärmetauscher, insbesondere einem Kreuzgegenstrom-Wärmetauscher vorgesehen. In besonders zweckmäßiger Weise ist die Energierückgewinnung mit einer Feuchterückführung ausgebildet, wobei Feuchtigkeit der Abluft der Frischluft zugeführt wird. Sämtliche Luftwege bzw. Kanäle sind konsequent voneinander getrennt, und eine Luftvermischung im Gerät findet nicht statt. Die Kanäle sind als Wärme- und / oder Schalldämmkanäle ausgebildet, und das Gehäuse ist thermisch getrennt. Der Einbau kann nach außen hin sichtbar oder verdeckt liegend erfolgen. Der Luftaustritt bzw. der raumseitige Lufteintritt ist in vorteilhafter Weise möglichst tief zur Erzeugung einer Quelllüftung vorgesehen. Des Weiteren kann je nach Bauvorschrift, Einbauart oder sonstigen Anforderungen raumseitig ein tangentieller Luftaustritt vorgesehen sein. Die Abluft wird entsprechend den zu beachtenden Randbedingungen, Einbausituationen oder dergleichen des Lüftungsgerätes von oben, von vorne oder seitlich zugeführt. Der für Heizung und/oder Kühlung vorgesehene Konvektor ist vorteilhaft im Ein-, Zwei-, Drei- oder Vier-Leitersystem ausgebildet, wobei je nach Bedarf eine Ausführung mit oder ohne Kondensatschale vorgesehen werden kann. Ferner besteht mittels entsprechend angeordneter und ausgebildeter Filter im Lüftungsgerät die Filtermöglichkeit ab EU 2 bis hin zu Pollenfiltern.

In einer besonderen Ausgestaltung enthält das Lüftungsgerät eine integrierte Regelung des Gebläses, insbesondere dessen Drehzahl, um in Abhängigkeit eines Windsoges und / oder Winddrucks beispielsweise auf die Außenfassade, das Gebläse davon unabhängig zu führen, um somit konstante Volumenströme zu transportieren und konstante Heiz- und / oder Kühlleistungen einzustellen. Hierzu ist vorteilhaft eine Differenzdruckmessung vor und/oder nach wenigstens einem Gebläse, zweckmäßig sämtlichen Gebläsen des Lüftungsgerätes vorgesehen. Somit wird insbesondere über eine Logikeinheit, welche bevorzugt in die Steuer- und Regeleinheit integriert ist, ein zumindest näherungsweise konstanter Volumenstrom innerhalb eines vorgebbaren Druckfensters selbsttätig eingeregelt. Weiterhin sind in zweckmäßiger Weise das Zuluft- und das Abluftgebläse derart insbesondere über die Logikeinheit bzw. die Steuer- und Regeleinheit derart miteinander gekoppelt, dass sich ferner unter den beiden Gebläsen zumindest näherungsweise gleiche Volumenströme einstellen. Denn das eine wird bei Sog einen höheren Volumenstrom fördern als das andere, und bei Druck umgekehrt.

Das dezentrale Lüftungsgerät, welches in einer Fenster- oder Fassadenkonstruktion angeordnet ist, enthält ein thermisch getrenntes Gehäuse. Aus akustischen und/oder thermischen Gründen sind die Luftwege bzw. Strömungskanäle und ferner im wesentlichen der gesamte Innenraum des Gehäuses mit einem besonderen Dämmaterial ausgekleidet. Des Weiteren sind die Luftwege bzw. Strömungskanäle mit einer speziellen, akustisch transparenten Oberfläche versehen.

Die Zuluft oder Frischluft wird, bezogen auf den genannten Raum bzw. das Gebäude von außen her angesaugt und über schallgedämmte Kanäle, welche entsprechend der Luftmenge ausgelegt sind, dem Raum wärme- und schallgedämmt zugeführt. Weiterhin wird mittels des Gerätes raumseitig an der Geräteoberseite oder Vorderseite Abluft angesaugt und über die wärme- und schallgedämmten Luftkanäle nach außen hin abgeführt. Mittels eines Wärmetauschers, welcher insbesondere als Kreuzstromplatten-Wärmetauscher ausgebildet ist, wird die in der Abluft enthaltene Energie indirekt der Frischluft zur Energierückgewinnung zugeführt. Somit kann im Sommer kühlere Abluft aus dem Raum wärmere von außen zugeführte Zuluft energetisch günstig kühlen und im Winter energetisch günstig die Zuluft bzw. Frischluft erwärmen.

In einer besonderen Weiterbildung des Lüftungsgerätes wird mittels einer Bypass-Regelung ein für das Gebäude energetisch günstiger Betrieb ermöglicht, um in denjenigen Betriebsfällen, in welchen keine Energierückgewinnung gewünscht wird, diese bzw. den Wärmetauscher zu umgehen. Diese Betriebsart, welche als innere Wärmetauscher-Umgehung bezeichnet wird, wird dann vorgegeben, wenn die Frischluft kühler als die Raumluft ist und wenn mit der Frischluft der Raum energetisch günstig gekühlt werden soll, insbesondere zwecks Nachtauskühlung oder in Übergangszeiten.

Weiterhin zeichnet sich das Lüftungsgerät dadurch aus, dass für das bei dem inneren Wärmetauscher anfallende Kondensat eine indirekte feuchte Rückführung vorgesehen ist und somit eine Ableitung des Kondensats durch eine sogenannte Kondensatleitung nicht erforderlich ist. Hierzu ist der Kreuzplatten-Wärmetauscher mit seinen im wesentlichen senkrecht angeordneten Platten jeweils in den Schächten für die Abluft nach unten hin offen ausgebildet, so dass das anfallende Kondensat in eine darunter angeordnete Kondensatschale gelangen bzw. tropfen kann. Diese innere Kondensatschale enthält in vorteilhafter Weise ein Element zur luftdichten Leitung des aufgefangenen Kondensats in den Bereich des Zuluft-Kanals, insbesondere ein für diesen Anwendungsfall bestimmtes Vlies. Eine Luftvermischung zwischen Zuluft und Abluft kann aufgrund der Trennung mittels des Vlieses, bevorzugt in Kombination mit aufgebrachten Stegen, nicht erfolgen. Das anfallende Kondensat wird der trockeneren Zuluft somit indirekt zugeführt, so dass die Zuluft das derart aufgenommene Kondensat dem Raum zuführt.

Weiterhin werden die getrennten Zuluft- und Abluftwege mittels einer geeigneten Vorrichtung bei abgeschalteten Gebläsen, bevorzugt über die Regel- und/oder Steuereinheit verschlossen, so dass keine unerwünschte Be-, Ent- oder Rückbelüftung über das Lüftungsgerät stattfinden kann.

In einer besonderen Weiterbildung enthält das Lüftungsgerät eine Funktionseinheit, welche nur als Umlufteinheit oder auch als Umlufteinheit mit zusätzlicher Frischluftansaugung ausgebildet ist und mittels welcher ein erhöhter Heiz- oder Kühlleistungsbedarf bis zu einem möglichen Maximum sicher gestellt wird. Hierbei wird über einen im Lüftungsgerät integrierten, wie vorstehend beschrieben, wärme- und schallgedämmten Luftkanal zusätzlich Raumluft abgesaugt und einer Mischluftkammer vor dem raumseitigen Konvektor zugeführt. Diese integrierte Umlufteinheit zeichnet sich zusätzlich dadurch aus, dass eine selbsttätige Klappe oder dergleichen vorgesehen ist, welche das Rückströmen bei abgeschaltetem Umluftgebläse über dessen Luftkanal verhindert, welcher in die genannte Mischluftkammer mündet. Bei der Ausführungsform mit zusätzlicher Frischluftansaugung über die Umlufteinheit kann über das Öffnen einer stetig geregelten Klappe oder dergleichen Frischluft angesaugt werden. Aufgrund der stetig geregelten Umluft-Frischluftklappe oder dergleichen kann somit die Frischluftrate wesentlich bis zu einem maximal gewünschten bzw. vorgegebenen Wert entsprechend der maximalen Luftleistung der Umlufteinheit erhöht werden.

Weiterbildungen und besondere Ausgestaltungen der Erfindung sind in den Unteransprüchen sowie der nachfolgenden Beschreibung eines besonderen Ausführungsbeispiels angegeben.

Die Erfindung wird nachfolgend an Hand des in der Zeichnung dargestellten Ausführungsbeispiels näher erläutert, ohne dass insoweit eine Beschränkung erfolgt. Es zeigen:
- Fig. 1: einen Schnitt durch Lüftungsgerät in einer vertikalen Ebene,
- Fig. 2: einen Schnitt entlang Schnittlinie II gemäß Fig. 1,
- Fig. 3: eine Aufsicht auf das Lüftungsgerät in Richtung III gemäß Fig. 2.

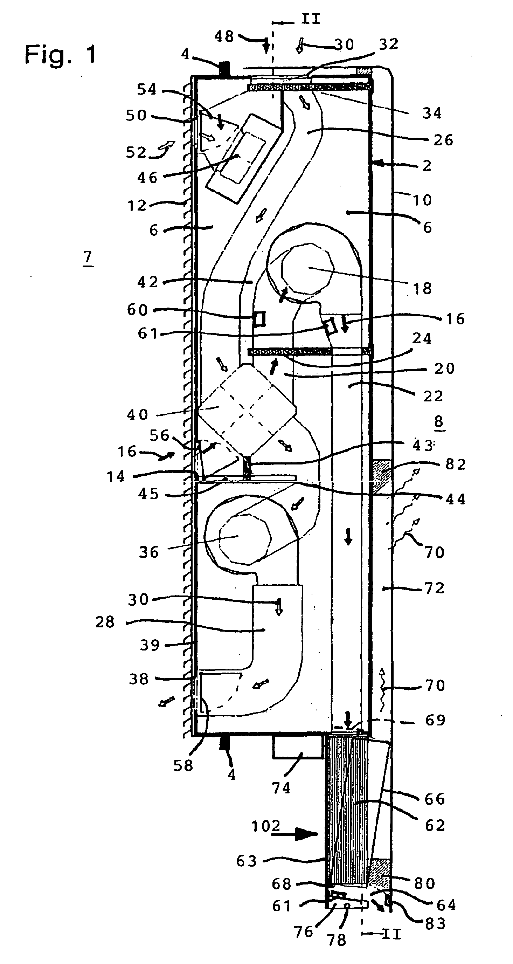

Gemäß Figur 1 enthält das Lüftungsgerät ein thermisch getrenntes Gehäuse 2 mit einem Einspannrahmen 4, welcher bevorzugt umlaufend und / oder vierseitig ausgebildet ist zwecks Verbindung mit einer Fassade- oder Fensterkonstruktion oder dergleichen. Das Lüftungsgerät kann als Boden-Brüstungs-Decken- oder Paneelgerät zum Einsatz gelangen. Abgesehen von den noch zu erläuternden Luftkanälen, Gebläsen und sonstigen Einbaukomponenten ist das Gehäuse innen im wesentlichen vollständig mit Dämm-Material 6 zur Wärme- und / oder Schalldämmung versehen. Das eingebaute Lüftungsgerät befindet sich zwischen einem Außenraum 7 und einem Raum 8 eines Gebäudes. Dem Raum 8 zugewandt enthält das Lüftungsgerät eine innere Verkleidung 10 und dem Außenraum 7 zugewandt an der Außenseite äußere Wetterschutz-Lamellen 12 oder dergleichen. Das Gehäuse 2 enthält an der Außenseite eine Einströmöffnung 14 für Frischluft oder Zuluft, welche gemäß der Pfeile 16 von einem Zuluft-Gebläse 18 durch einen Zuluftkanal 20, 22 angesaugt und zu einer rauminnenseitigen Ausströmöffnung 23 gefördert wird. Vor dem Zuluftgebläse 18 ist im Zuluftkanal 20 ein Zuluftfilter 24 angeordnet, welcher eine Luftfilterung, bevorzugt ab EU 2 bis hin zu Pollenfilter, ermöglicht.

Ferner ist im Gehäuse 2 bzw. dessen Dämm-Material 6 ein Abluftkanal 26, 28 für aus dem Raum 8 abzuführende Abluft gemäß der Pfeile 30 vorgesehen. Die Abluft 30 wird durch eine gemäß Zeichnung obere Öffnung 32 des Gehäuses 2 sowie einen der Öffnung 32 zugeordneten Filter 34 mittels eines im Inneren des Gehäuses angeordneten Abluftgebläses 36 angesaugt, um über den gemäß Zeichnung nach unten anschließenden Kanal 28 durch eine Ausströmöffnung 38 nach außen zu gelangen.

Bezogen auf die Längserstreckung des Gehäuses 2 parallel zu dessen Außenwand 39, ist zumindest näherungsweise in der Mitte des Gehäuses 2 ein Wärmetauscher 40 vorgesehen, welcher den bevorzugter Weise als Kreuzstrom-Plattenwärmetauscher ausgebildet ist und eine Energierückgewinnung aus der Abluft für die Zuluft ermöglicht. Zur sicheren konsequenten Trennung des Zuluftkanals 20 vom Abluftkanal 26 befindet sich zwischen diesen Kanälen eine Zwischenwand 42, 43, welche mit dem Wärmetauscher 40 dicht verbunden ist. Unterhalb des Wärmetauschers 40 ist eine Auffangschale 44 für anfallendes Kondensat angeordnet. In der Auffangschale 44 befindet sich ein insbesondere als Vlies ausgebildetes Element 45 zur luftdichten Leitung des aus der Abluft aufgefangenen Kondensats in den Bereich des Zuluft-Kanals 20. Mittels der bis zur Auffangschale 44 bzw. zum Element oder Vlies 45 nach unten geführten Zwischenwand 42 und 43, bevorzugt in Kombination mit aufgebrachten Stegen, erfolgt zuverlässig eine Trennung der Abluft von der Zuluft. Der Wärmetauscher 40 ist mit seinen im wesentlichen senkrecht angeordneten Platten derart ausgebildet, dass dessen Schächte für die Abluft nach unten hin offen sind und somit anfallendes Kondensat in die unterhalb angeordnete Auffangschale 44 gelangen bzw. tropfen kann. Durch das genannte Element bzw. Vlies 45 gelangt das Kondensat in den Bereich des Zuluftkanals 20 hinter der Einströmöffnung 14.

Das Gehäuse 2 enthält im Bereich der Öffnung 32 ein weiteres Gebläse 46, mittels welchem Umluft gemäß Pfeil 48 durch die Öffnung 32 angesaugt werden kann. Das weitere Gebläse 46 ist hinter einer weiteren Öffnung 50 in dem Gehäuse 2 bzw. dessen Außenwand 39 angeordnet, wobei durch die weitere Öffnung 50 zusätzliche Umluft gemäß Pfeil 52 angesaugt werden kann. Mittels eines Verschlusselements 54, welches insbesondere als eine schwenkbare Klappe ausgebildet ist, kann gemäß der wählbaren Betriebsart die weitere Öffnung 50 verschlossen oder freigegeben werden. Zur Betätigung des Verschlusselements 54 ist ein hier nicht dargestellter, bevorzugt elektrischer Antrieb vorgesehen, welcher von der erwähnten Regel- und Steuereinheit ansteuerbar ist. Auch der etwa in der Mitte der Längserstreckung des Gehäuses 2 angeordneten Einströmöffnung 14 für Zuluft ist ein Verschlusselement 56 zugeordnet, welches gleichfalls als schwenkbar und mittels eines Antriebs betätigbare Klappe ausgebildet ist. Des Weiteren ist der Ausströmöffnung 38 für Abluft ein wiederum bevorzugt als Klappe ausgebildetes Verschlusselement 58 zugeordnet, welches über einen Antrieb betätigbar und entsprechend der gewählten Betriebsart über die Steuer- und Regeleinheit ansteuerbar ist.

In einer besonderen Ausgestaltung des Lüftungsgerätes ist wenigstens ein Gebläse in Abhängigkeit des Windsogs und des Winddrucks geregelt. Die erfindungsgemäße vom Sog und Winddruck abhängige Regelung wird nachfolgend im Zusammenhang mit dem Zuluft-Gebläse 18 erläutert und ist analog auch bei den anderen Gebläsen 36 und 46 vorgesehen. In Strömungsrichtung der Luft vor dem Zuluft-Gebläse 18 ist ein erster Sensor 60 und nach dem Zuluft-Gebläse 18 ist ein zweiter Sensor 61 im Zuluftkanal 22, 22 angeordnet. Mittels der Sensoren 60, 61 erfolgt eine Differenzdruckmessung und ein entsprechendes Signal wird insbesondere einem Logikelement der Regel- und Steuereinheit zugeführt zur Drehzahlregelung des Zuluft-Gebläses 18. Somit wird ein zumindest näherungsweise konstanter Volumenstrom, bevorzugt innerhalb eines vorgebbaren Druckfensters oder Druckbereiches, selbsttätig eingeregelt. Aufgrund dieser integrierten Regelung wird das Zuluft-Gebläse 18 unabhängig vom Windsog und/oder Winddruck, welcher im Außenraum 7 bzw. an der Fassade vorherrscht, geführt, und es wird aufgrund des im wesentlichen konstanten Volumenstroms eine konstante Heiz- und/oder Kühlleistung gewährleistet. Alternativ oder zusätzlich zum zweiten Sensor 61 im Zuluftkanal 22 kann in bevorzugter Weise im Bereich einer insbesondere unterhalb des Konvektors 62 vorhandenen Auslassöffnung 64 ein weiterer Sensor 61 angeordnet sein zur Drehzahlregelung, insbesondere des Zuluft-Gebläses 18.

Im Bereich der Ausströmöffnung 23 und zweckmäßig unterhalb derselben ist ein Konvektor 62 bewegbar angeordnet. Zur Befestigung und/oder Verbindung des Konvektors 62 mit dem Gehäuse 2 ist eine Grundplatte 63 vorgesehen, wobei unterhalb des Konvektors 62 die Auslassöffnung 64 vorhanden ist. Zwecks Schall- und/oder Wärmedämmung ist der Konvektor 62 zumindest teilweise innerhalb einer hier nicht dargestellten Packung aus geeignetem Dämmaterial angeordnet. In der dargestellten ersten Position des Konvektors durchströmt die vom Zuluft-Gebläse 18 geförderte Zuluft von oben nach unten durch den Konvektor 62 und gelangt durch die Auslassöffnung 64 in den Raum 8. Mittels Linien 66 ist eine zweite Position des Konvektors angedeutet, welcher hierbei zumindest teilweise in Richtung zum Raum 8 bewegt, und zwar um eine Drehachse 68 geschwenkt ist. Der Konvektor 62 ist auf der Grundplatte 63 mittels eines Lagers um die Drehachse 68 schwenkbar gelagert. In der zweiten Position, in welcher die Ausströmöffnung 23 bevorzugt selbsttätig und/oder mittels eines Absperrorganes 69 geschlossen ist, kann in Folge freier Konvektion der Konvektor von durch die Öffnung 64 einströmende Luft des Raumes 8 von unten nach oben durchströmt werden, um gemäß der Pfeile 70 wieder in den Raum 8 gelangen. In vorteilhafter Weise ist das Absperrorgan mit dem Konvektor 62 derart gekoppelt, dass beim Bewegen und/oder Schwenken des Konvektors 62 in die zweite Position der Strömungsweg vom Zuluftkanal 62 nach außen bzw. durch den Konvektor 62 abgesperrt ist. Befindet sich der Konvektor 62 in der ersten Position, so gibt das Absperrorgan 69 den Strömungsweg vom Zuluftkanal 22 zum und durch den Konvektor 62 frei.

Der Konvektor 62 ist in vorteilhafter Weise im Bereich der Ausströmöffnung 23 des Zuluftkanals 22 angeordnet, und zwar bevorzugt unterhalb des Gehäuses 2. In einer alternativen Ausgestaltung ist der Konvektor 22 zumindest teilweise innerhalb des Gehäuses 2 angeordnet, und zwar gleichfalls im Bereich der Ausströmöffnung 23. Bei zumindest teilweiser oder kompletter Anordnung des Konvektors 22 im Gehäuse 2 enthält dieses im Bereich des Konvektors 62 wenigstens eine Öffnung und/oder ein Absperrorgan derart, dass in der ersten Position die vom Zuluft-Gebläse 18 geforderte Luft durch den Konvektor 62 gefördert wird, während in der zweiten Position die Raumluft infolge einer Konvektion den Konvektor 62 durchströmt und durch die genannte Öffnung des Gehäuses in den Raum strömen kann. Des Weiteren kann in einer bevorzugten alternativen Ausgestaltung der Erfindung der Konvektor zumindest teilweise im Gehäuse 2 fest angeordnet sein, wobei mittels des genannten Absperrorgans in der ersten Stellung desselben der Strömungsweg der aus dem Gehäuse ausströmenden Luft durch den Konvektor 62 freigegeben ist, während in der zweiten Position die Raumluft den Konvektor 62 in der entgegengesetzten Richtung infolge der Konvektion durchströmt und durch die genannte wenigstens eine Öffnung, welche hierbei freigegeben ist, ausströmt.

Der Konvektor 62 ist ein Heiz- oder Kühlkörper mit einem Ein-, Zwei-, Drei- oder Vierleitersystem, wobei entsprechend der mittels der Regel- und Steuereinheit vorgegebenen Betriebsart über das zugeführte Medium Wärme oder Kälte zugeführt wird. Die innere Verkleidung 10 ist in einem vorgegebenen Abstand zur Rückwand 71 des Gehäuses 2 angeordnet, so dass ein Kanal 72 vorhanden ist, durch welchen in der zweiten Position die in Folge Konvektion aufsteigende Luft nach oben abströmen und durch entsprechend ausgebildete Öffnungen der inneren Verkleidung 10 in den Raum 8 abströmen kann. Wie ersichtlich, überdeckt die innere Verkleidung 10 auch den Konvektor 62. Der Abstand der inneren Verkleidung 10 zum Gehäuse 2 bzw. zum Konvektor 62 ist derart vorgegeben, dass in der zweiten Position desselben gemäß der Linie 66 die ausströmende Luft oder aufsteigende Thermik gemäß der Pfeile 70 im wesentlichen ungehindert aus dem Konvektor 2 austritt und in den Kanal 72 gelangt. Um den Konvektor 62 in die erste oder zweite Position zu bewegen bzw. zu schwenken, ist eine an der Grundplatte und/oder an der Unterseite des Gehäuses befestigte Antriebseinheit 74 vorgesehen, welche entsprechend der gewünschten Betriebsart mittels der Regel- und Steuereinheit angesteuert wird.

Unterhalb des Konvektors 62 ist unter Belassung eines freien Durchtritts für die Luft eine Auffangwanne 76 für Kondensat angeordnet bzw. an der Grundplatte 63 befestigt. Die Auffangwanne 76 enthält einen seitlichen Ablaufstutzen 78 für das Kondensat. Zwischen dem Konvektor 72 und diesen übergreifenden inneren Verkleidung 10 ist im Bereich der Auslassöffnung 64 oberhalb derselben ein Strömungskeil 80 angeordnet und entsprechend weiter oben ein Strömungskeil 82, um die aufsteigende Thermik in den Raum 8 zu lenken. Mittels eines dem Konvektor 62 nachgeschalteten Temperaturfühlers 83 wird die Temperatur der ausströmenden Luft erfasst und als Messgröße der Regel- und Steuereinheit zugeführt, um unter Berücksichtigung variabler Vorgaben die Lufttemperatur zu beeinflussen.

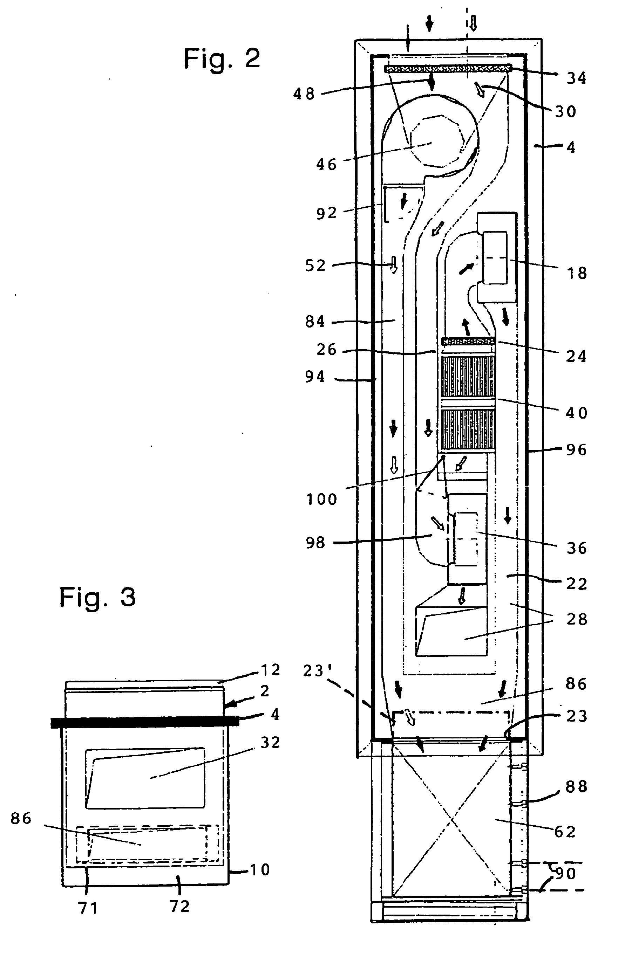

Fig. 2 zeigt einen Schnitt durch das Lüftungsgerät entlang Schnittlinie II gemäß Fig. 1. An das Gebläse 46 schließt ein Luftkanal 84 an, welcher sich in Längsrichtung des Gehäuses bis zu einer Mischkammer 86 erstreckt, in welcher die durch den Luftkanal 84 geförderte Luft sich mit der Zuluft gemäß Pfeil 16 vermischen kann. In bevorzugter Weise ist somit eine Funktionseinheit geschaffen, welche grundsätzlich ausschließlich als Umlufteinheit ausgebildet ist. Die Mischkammer 86 mündet in die Ausströmöffnung 23. Wie erläutert, kann mittels des weiteren Gebläses 46 Umluft 48 und/oder zusätzliche Zuluft 52 angesaugt und durch den Kanal 84 in die Mischkammer 86 bzw. zum Konvektor 62 gefördert werden. Die Funktionseinheit ist damit als Umlufteinheit mit zusätzlicher Frischluftansaugung ausgebildet. Der Konvektor 62 bildet einen Heiz- oder Kühlkörper, welcher hier als ein Vierleitersystem mit vier Anschlüssen 88 ausgebildet ist. An diese Anschlüsse 88 sind bewegbare und/oder flexible Leitungen gemäß der gestrichelten Linie 90 für das Heiz- bzw. Kühlmedium angeschlossen.

Dem weiteren Gebläse 46 ist ein weiteres Verschlusselement 92 nachgeschaltet, welches insbesondere als schwenkbare Klappe ausgebildet ist. Das Verschlusselement 92 ist bevorzugt selbsttätig ausgebildet, um bei abgeschaltetem Gebläse 46 eine Rückströmung durch den Luftkanal 84 zu unterbinden. Gegebenenfalls kann eine Antriebseinheit für das Verschlusselement 92 vorgesehen sein, um über die Regel- und Steuereinheit entsprechend der gewählten Betriebsart den Luftkanal 84 freizugeben oder abzusperren.

Der Luftkanal 84 ist benachbart zu der einen Längswand 94 angeordnet, und zwar im Dämmaterial 6, welches zur Längswand 94 eine vorgegebene Dicke zur Erzielung der gewünschten Dämmwirkung aufweist. Nahe der anderen Längswand 96 befindet sich gleichfalls im Dämmaterial 6 der zur Mischkammer 86 führende Zuluftkanal 22. Benachbart zum Luftkanal 84 befindet sich im Dämmaterial 6 der Abluftkanal 26 und benachbart zu diesem in Richtung zur anderen Längswand 96 ist der Wärmetauscher 40 angeordnet.

In einer besonderen Ausgestaltung des erfindungsgemäßen Lüftungsgeräts ist in Verlängerung des Abluftkanals 26 ein Bypasskanal 98 mit einem Bypasselement 100 angeordnet. Das Bypasselement ist zweckmäßig als eine schwenkbare Klappe ausgebildet und mittels einer bevorzugt elektrischen Antriebseinheit betätigbar. Die Antriebseinheit ist über die Regel- und Steuereinheit regel- bzw. ansteuerbar. Ist mittels des Bypasselements die Verbindung des Abluftkanals 26 zum Bypasskanal 98 freigegeben, so wird der Wärmetauscher 40 umgangen und die Abluft wird direkt vom Abluftgebläse 36 angesaugt. Die damit ermöglichte Betriebsart, innere Wärmetauscherumgehung, wird dann gewählt, wenn die Frischluft kühler als die Raumluft ist, so dass mit der Frischluft der Raum 8 beispielsweise zur Nachtauskühlung energetisch günstig gekühlt werden soll. Durch die erfindungsgemäße Bypassregelung wird somit ein energetisch günstiger Betrieb ermöglicht.

In einer alternativen Ausgestaltung kann das Lüftungsgerät, anstelle der bisher beschriebenen Anordnung, gemäß welcher die Gebläse 36, 18 und 46 sich im wesentlichen vertikal übereinander befinden, auch derart angeordnet sein, dass die Längsachse des Lüftungsgerätes im wesentlichen horizontal ausgerichtet ist und die genannten Gebläse nebeneinander liegen. In dieser Einbausituation ist das Lüftungsgerät im Vergleich mit Figuren 1 und 2 somit um 90° gedreht angeordnet. Bei dieser Ausgestaltung enthält das Gehäuse 2 im Bereich der Mischkammer 86 in der Längswand, welche gemäß Figur 1 vor bzw. hinter der Zeichenebene liegt, die mit strichpunktierten Linien angedeutete Ausströmöffnung 23'. Analog zu obigen Ausführungen ist unterhalb dieser Ausströmöffnung 23' der Konvektor angeordnet, wobei die innere Verkleidung 10 entsprechend zur Überdeckung des Konvektors ausgebildet ist und ferner die Austrittsöffnungen für die aufsteigende Thermik bei freier Konvektion in der zweiten Position des Konvektors aufweist.

Schließlich kann im Rahmen der Erfindung anstelle der erläuterten schwenkbaren Anordnung der Konvektor 62 translatorisch bewegbar angeordnet sein, wie es in Figur 1 mit dem Pfeil 102 angedeutet ist. Anstelle der Drehachse sind bei dieser Ausgestaltung geeignete Führungselemente einerseits dem Konvektor 62 und andererseits dem Gehäuse 2 derart zugeordnet, dass im Vergleich mit Figur 1 der Konvektor 62 aus der dargestellten ersten Position durch eine im wesentlichen parallele Verschiebung in Richtung des Pfeiles 102 insgesamt nach rechts bis zur inneren Verkleidung 10 mittels eines entsprechend ausgebildeten Antriebs verschoben werden kann und umgekehrt.

In Figur 3 ist eine Aufsicht von oben auf das Lüftungsgerät in Blickrichtung III gemäß Figur 2 dargestellt. Die äußeren Wetterschutzlamellen 12, der vierseitige Einspannrahmen 4 sowie die Ansaugöffnung 32 für die Umluft und die Abluft sind gut zu erkennen. Des Weiteren ist mittels gestrichelter Linien die untere Mischluftkammer 86 angedeutet. Wie ersichtlich, ist die innere Verkleidung 10 des Gehäuses 2 U-förmig ausgebildet, wobei zwischen der Rückwand 71 und der inneren Verkleidung 10 ein hinreichend großer Abstand zur Bildung des oben erläuterten Kanals 72 für die aufsteigende Thermik vorhanden ist.

### Bezugszeichen

- 2: Gehäuse
- 4: Einspannrahmen
- 6: Dämm-Material
- 7: Außenraum
- 8: Raum eines Gebäudes
- 10: innere Verkleidung
- 12: äußere Wetterschutzlamelle
- 14: Einströmöffnung für Zuluft
- 16: Pfeil / Zuluft
- 18: Zuluft-Gebläse
- 20, 22: Zuluft-Kanal
- 23: Ausströmöffnung für Zuluft
- 24: Zuluft-Filter
- 26, 28: Abluft-Kanal
- 30: Pfeil / Abluft
- 32: obere Öffnung
- 34: Filter für Abluft und Umluft
- 36: Abluft-Gebläse
- 38: Ausströmöffnung für Abluft
- 39: Außenwand von 2
- 40: Wärmetauscher
- 42: Zwischenwand
- 44: Auffangschale
- 45: Element / Vlies
- 46: weiteres Gebläse
- 48: Pfeil / Umluft
- 50: weitere Öffnung
- 52: Pfeil / zusätzliche Umluft
- 54: Klappe / Verschlusselement für 50
- 56: Klappe / Verschlusselement für 14
- 58: Klappe / Verschlusselement für 38
- 60, 61: Sensor für Windsog oder Winddruck
- 62: bewegbarer Konvektor
- 63: Grundplatte
- 64: Auslassöffnung unterhalb von 62
- 66: Linie
- 68: Drehachse
- 69: Absperrorgan
- 70: Pfeil für aufsteigende Thermik
- 71: Rückwand
- 72: Kanal zwischen 10 und 72
- 74: Antriebseinheit für 62
- 76: Auffangwanne
- 78: Ablaufstutzen
- 80, 82: Strömungskeil
- 83: Temperaturfühler
- 84: Luftkanal
- 86: Mischluftkanal
- 88: Anschluss
- 90: gestrichelte Linie, flexible Leitung
- 92: Klappe / Verschlußelement für 84
- 94: eine Längswand
- 96: andere Längswand
- 98: Bypasskanal
- 100: Bypasselement
- 102: Pfeil für translatorische Bewegung von 62

## Patentansprüche

1. Lüftungsgerät für den Einbau zwischen einem Außenraum (7) und einem Raum (8) eines Gebäudes, enthaltend in einem Gehäuse (2) wenigstens ein Gebläse (18), insbesondere für Zuluft, einen Kanal (20, 22) mit einer Einströmöffnung (14) und einer Ausströmöffnung (23) für die mittels des Gebläses (18) durch den Kanal (20, 22) geförderte Luft, sowie einen insbesondere der Ausströmöffnung (23) zugeordneten Konvektor (62), welcher mit Heiz- oder Kühlenergie beaufschlagbar ist,
**dadurch gekennzeichnet, dass** der Konvektor (62) in zwei Positionen derart bewegbar angeordnet ist, dass in der ersten Position die zur Ausströmöffnung (23) geförderte Luft durch den Konvektor (62) strömt und in der zweiten Position Raumluft in Folge Konvektion den Konvektor (62) durchströmt.

2. Lüftungsgerät nach Anspruch 1, **dadurch gekennzeichnet, dass** in der zweiten Position die Ausströmöffnung (23) abgesperrt ist und/oder das Gebläse (18) abgeschaltet ist.

3. Lüftungsgerät nach Anspruch 1 oder 2, **dadurch gekennzeichnet, dass** der Konvektor (62) unterhalb des Gehäuses (2), insbesondere auf einer mit dem Gehäuse (2) verbundenen Grundplatte (63), angeordnet ist und/oder dass der Konvektor (62), insbesondere auf der Grundplatte (63), um eine Drehachse (8) schwenkbar gelagert ist oder dass der Konvektor (62) mittels Führungselementen translatorisch bewegbar ist.

4. Lüftungsgerät nach einem der Ansprüche 1 bis 3, **dadurch gekennzeichnet, dass** zwischen einer dem Raum (8) zugewandten Verkleidung (10) und einer Rückwand (71) des Gehäuses (2) ein Kanal (72) vorgesehen ist, durch welchen in der zweiten Position des Konvektors (62) aus diesem die Luft nach oben abströmt, wobei die innere Verkleidung (10) Luft-Durchtrittsöffnungen aufweist.

5. Lüftungsgerät nach einem der Ansprüche 1 bis 4, **dadurch gekennzeichnet, dass** der Konvektor (62) im Bereich einer Ausströmöffnung (23) des Zuluftkanals (22) angeordnet ist und/oder dass der Konvektor (62) unterhalb des Gehäuses (2) oder zumindest teilweise innerhalb des Gehäuses (2) angeordnet ist und/oder dass in der zweiten Position mittels eines bewegbaren Absperrorgans (69), insbesondere eines Schiebers oder einer Klappe, der Strömungsweg zwischen dem Zuluftkanal (22) und dem Konvektor (62) absperrbar bzw. abgesperrt ist und/oder dass der Konvektor (62) und/oder das Absperrorgan (69) mittels einer Antriebseinheit (74) derart betätigbar sind, dass in der ersten Position der Strömungsweg vom Zuluftkanal (22) zum Konvektor (62) freigegeben und in der zweiten Position abgesperrt ist.

6. Lüftungsgerät nach einem der Ansprüche 1 bis 5, **dadurch gekennzeichnet, dass** der Konvektor (62) und/oder die dem Konvektor (62) zugeordnete Ausströmöffnung (23) in einem der Rückwand (71) naheliegenden Bereich angeordnet ist, und/oder dass zumindest der obere Bereich des Konvektors (62) in der zweiten Position über die Rückwand (71) vorsteht und/oder dass der Konvektor (62) in beiden Positionen von der inneren Verkleidung (10) überdeckt ist.

7. Lüftungsgerät nach einem der Ansprüche 1 bis 6, **dadurch gekennzeichnet, dass** ein Abluftgebläse (36) und ein Wärmetauscher (40), welcher insbesondere als Kreuzstromplattenwärmetauscher ausgebildet ist, vorgesehen sind und/oder dass der Einströmöffnung (14) des Zuluftkanals (20, 22) und/oder der Ausströmöffnung (38) des Abluftkanals (28) bevorzugt elektrisch betätigbare Verschlusselemente (56, 58) zugeordnet sind, welche insbesondere als Klappen ausgebildet sind.

8. Lüftungsgerät nach einem der Ansprüche 1 bis 7, **dadurch gekennzeichnet, dass** ein weiteres Gebläse (46) vorgesehen ist, mittels welchem bedarfsweise Umluft aus dem Raum (8) und/oder zusätzliche Zuluft von außen ansaugbar und in einen Luftkanal (84) förderbar ist, wobei der Luftkanal (84) bevorzugt in eine Mischkammer (86) mündet, in welche gleichfalls der Zuluftkanal (22) mündet, und wobei die Mischluftkammer (86) vor der Ausströmöffnung (23) oder dem Kollektor (62) angeordnet ist.

9. Lüftungsgerät nach einem der Ansprüche 1 bis 8, **dadurch gekennzeichnet, dass** eine vom Winddruck oder Windsog abhängige Regelung des oder der Gebläse (18, 36, 46) vorgesehen ist, enthaltend wenigstens einen Sensor (60, 61), insbesondere zur Differenzdruckmessung vor und hinter dem Gebläse (18, 36, 46), wobei in Abhängigkeit der Sensorsignale eine Drehzahlregelung des oder der Gebläse (18, 36, 46) für einen im wesentlichen konstanten Volumenstrom erfolgt.

10. Lüftungsgerät, insbesondere nach einem der Ansprüche 1 bis 9, **dadurch gekennzeichnet, dass** eine Bypassregelung zur bedarfsweisen Umgehung des Wärmetauschers (40) vorgesehen ist, wobei zwischen dem zum Wärmetauscher führenden Abluftkanal (26) und dem Abluftgebläse (36) ein Bypasskanal (98) zur Umgehung des Wärmetauschers (40) angeordnet ist und wobei dem Bypasskanal (98) ein Bypasselement (100) zugeordnet ist, welches insbesondere als eine schwenkbare Klappe ausgebildet ist und welches mittels einer bevorzugt elektrischen Antriebseinheit betätigbar ist, um den Bypasskanal (98) entsprechend der gewählten Betriebsart ganz oder teilweise abzusperren bzw. freizugeben.

## Claims

1. Ventilation device for installation between an exterior space (7) and a room (8) of a building, comprising, in a housing (2), at least one blower (18) in particular for supply air, a duct (20, 22) having an inlet opening (14) and an outlet opening (23) for the air which is pumped through the duct (20, 22) by means of the blower (18), and a convector (62) which is associated in particular with the outlet opening (23) and to which heating or cooling energy can be applied, **characterised in that** the convector (62) is arranged to be movable to two positions in such a way that, in the first position, the air pumped to the outlet opening (23) flows through the convector (62) and, in the second position, room air flows through the convector (62) as a result of convection.

2. Ventilation device according to claim 1, **characterised in that**, in the second position, the outlet opening (23) is closed off and/or the blower (18) is switched off.

3. Ventilation device according to claim 1 or 2, **characterised in that** the convector (62) is arranged underneath the housing (2), and in particular on a bottom plate (63) which is connected to the housing (2), and/or **in that** the convector (62) is mounted to be pivotable about an axis of rotation (8), in particular on the bottom plate (63), or **in that** the convector (62) is able to be moved in translation by means of guiding members,

4. Ventilation device according to one of claims 1 to 3, **characterised in that** there is provided, between a covering (10) facing into the room (8) and a rear wall (71) of the housing (2), a duct (72) through which the air flows upwards from the convector (62) when the latter is in the second position, the inner covering (10) having openings for air to pass through.

5. Ventilation device according to one of claims 1 to 4, **characterised in that** the convector (62) is arranged in the region of an outlet opening (23) of the duct (22) for supply air and/or **in that** the convector (62) is arranged underneath the housing (2) or at least partly inside the housing (2) and/or **in that**, in the second position, the path of flow between the duct (22) for supply air and the convector (62) can be shut off or is shut off by means of a movable shut-off member (69) and/or **in that** the convector (62) and/or the shut-off member (69) can be actuated by means of a drive unit (74) in such a way that the path of flow from the duct (22) for supply air to the convector (62) is opened in the first position and is shut off in the second position.

6. Ventilation device according to one of claims 1 to 5, **characterised in that** the convector (62) and/or the outlet opening (23) associated with the convector (62) is arranged in a region close to the rear wall (71), and/or **in that** at least the upper region of the convector (62) projects beyond the rear wall (71) in the second position and/or **in that** the convector (62) is covered by the interior covering (10) in both positions.

7. Ventilation device according to one of claims 1 to 6, **characterised in that** a blower (36) for exhaust air and a heat exchanger (40), which in particular is in the form of a cross-ftow plate heat exchanger, are provided, and/or **in that** the inlet opening (14) of the duct (20, 22) for supply air and/or the outlet opening (38) of the duct (28) for exhaust air preferably have associated with them closure members (5i5, 58) able to be actuated electrically which in particular are in the form of flaps.

8. Ventilation device according to one of claims 1 to 7, **characterised in that** a further blower (46) is provided by means of which ambient air can be drawn in from the room (8) and/or additional supply air can be drawn in from outside and can be pumped into an air duct (84), the air duct (84) preferably opening into a mixing chamber (86) into which the duct (22) for supply air also opens, and the chamber for mixed air (86) being arranged upstream of the outlet opening (23) or the collector (62).

9. Ventilation device according to one of claims 1 to 8, **characterised in that** a system for regulating the blower or blowers (18, 36, 46) as a function of wind pressure or wind-induced suction is provided, comprising at least one sensor (60, 61), in particular for measuring the difference in pressure upstream and downstream of the blower (18, 36, 46), regulation of the speed of revolution of the blower or blowers (18, 36, 46) taking place as a function of the sensor signals to give a volumetric flow which is substantially constant.

10. Ventilation device, in particular according to one of claims 1 to 9, **characterised in that** a bypass regulation system is provided to allow the heat exchanger (40) to be bypassed if required, a bypass duct (98) for bypassing the heat exchanger (40) being arranged between the duct (26) for exhaust air which leads to the heat exchanger and the blower (36) for exhaust air, and there being associated with the bypass duct (98) a bypass member (100) which takes the form of, in particular, a pivotable flap and which can be actuated by means of a preferably electrical drive unit to allow the bypass duct (98) to be wholly or partly shut off or opened as dictated by the mode of operation selected.

## Revendications

1. Dispositif de ventilation pour le montage entre un espace extérieur (7) et un espace (8) d'un bâtiment, contenant dans un boîtier (2) au moins une soufflante (18), en particulier pour de l'air frais, un canal (20, 22) avec un orifice d'admission (14) et un orifice d'échappement (23) pour l'air transporté à l'aide de la soufflante (18) par le canal (20, 22), ainsi qu'un convecteur (62) associé en particulier à l'orifice d'échappement (23), qui peut être sollicité en énergie de chauffage ou de refroidissement, **caractérisé en ce que** le convecteur (62) est disposé de manière mobile dans deux positions de telle sorte que dans la première position, l'air transporté vers l'orifice d'échappement (23) passe par le convecteur (62) et dans la seconde position, l'air ambiant passe à la suite de la convection par le convecteur (62).

2. Dispositif de ventilation selon la revendication 1, **caractérisé en ce que** dans la seconde position, l'orifice d'échappement (23) est fermé et/ou la soufflante (18) est désactivée.

3. Dispositif de ventilation selon la revendication 1 ou 2, **caractérisé en ce que** le convecteur (62) est disposé au-dessous du boîtier (2), en particulier sur une plaque de base (63) reliée au boîtier (2) et/ou **en ce que** le convecteur (62) est logé à pivotement autour d'un axe de rotation (8) en particulier sur la plaque de base (63) ou **en ce que** le convecteur (62) est mobile en translation à l'aide d'éléments de guidage.

4. Dispositif de ventilation selon l'une quelconque des revendications 1 à 3, **caractérisé en ce qu'**entre un revêtement (10) tourné vers l'espace (8) et une paroi arrière (71) du boîtier (2) est prévu un canal (72), au travers duquel dans la seconde position du convecteur (62), l'air s'échappe de celui-ci vers le haut, le revêtement (10) intérieur présentant des orifices de passage de l'air.

5. Dispositif de ventilation selon l'une quelconque des revendications 1 à 4, **caractérisé en ce que** le convecteur (62) est disposé dans la zone d'un orifice d'échappement (23) du canal d'air frais (22) et/ou **en ce que** le convecteur (62) est disposé au-dessous du boîtier (2) ou au moins partiellement à l'intérieur du boîtier (2) et/ou **en ce que** dans la seconde position, le chemin d'écoulement entre le canal d'air frais (22) et le convecteur (62) peut être fermé ou est fermé au moyen d'un organe d'arrêt (69) mobile, en particulier un coulisseau ou un clapet et/ou **en ce que** le convecteur (62) et/ou **en ce que** l'organe d'arrêt (69) peut être actionné au moyen d'une unité d'entraînement (74) de telle sorte que dans la première position, le chemin d'écoulement du canal d'air frais (22) au convecteur (62) soit libéré et dans la seconde position soit fermé.

6. Dispositif de ventilation selon l'une quelconque des revendications 1 à 5, **caractérisé en ce que** le convecteur (62) et/ou l'orifice d'échappement (23) associé au convecteur (62) est disposé dans une zone près de la paroi arrière (71), et/ou **en ce qu'**au moins la zone supérieure du convecteur (62) dépasse dans la seconde position de la paroi arrière (71) et/ou **en ce que** le convecteur (62) est recouvert dans les deux positions par le revêtement (10) intérieur.

7. Dispositif de ventilation selon l'une quelconque des revendications 1 à 6, **caractérisé en ce qu'**une soufflante d'air extrait (36) et un échangeur thermique (40) qui est réalisé en particulier comme un échangeur thermique à plaques à courants inversés, sont prévus et/ou **en ce qu'**à l'orifice d'admission (14) du canal d'air frais (20, 22) et/ou à l'orifice d'échappement (38) du canal d'air extrait (28) sont associés des éléments de fermeture (56, 58) pouvant être actionnés de préférence électriquement, qui sont réalisés en particulier comme des clapets.

8. Dispositif de ventilation selon l'une quelconque des revendications 1 à 7, **caractérisé en ce qu'**une autre soufflante (46) est prévue, au moyen de laquelle de l'air circulé de l'espace (8) et/ou de l'air frais supplémentaire de l'extérieur peut être aspiré si besoin est et transporté dans un canal d'air (84), le canal d'air (84) débouchant de préférence dans une chambre de mélange (86), dans laquelle le canal d'air frais (22) débouche également et la chambre de mélange d'air (86) étant disposée devant l'orifice d'échappement (23) ou le collecteur (62).

9. Dispositif de ventilation selon l'une quelconque des revendications 1 à 8, **caractérisé en ce qu'**une régulation dépendant de la pression de soufflage ou de l'appel d'air de la ou des soufflantes (18, 36, 46) est prévue, contenant au moins un capteur (60, 61), en particulier pour mesurer la pression différentielle devant et derrière la soufflante (18, 36, 46), en fonction des signaux de commande étant effectuée une régulation de la vitesse de rotation de la ou des soufflantes (18, 36, 46) pour un débit volumique essentiellement constant.

10. Dispositif de ventilation en particulier selon l'une quelconque des revendications 1 à 9, **caractérisé en ce qu'**une régulation de dérivation est prévue pour contourner, si besoin est, l'échangeur thermique (40), entre le canal d'air extrait (26) menant à l'échangeur thermique et la soufflante d'air extrait (36) étant disposé un canal de dérivation (98) pour contourner l'échangeur thermique (40) et un élément de dérivation (100) étant associé au canal de dérivation (98), lequel est réalisé en particulier comme un clapet pivotant et peut être actionné au moyen d'une unité d'entraînement de préférence électrique afin de fermer ou de libérer totalement ou partiellement le canal de dérivation (98) selon le mode de fonctionnement choisi.
